# EUROPEAN PATENT APPLICATION

(11) **EP 3 845 943 A1**
(43) Date of publication of application: **07.07.2021**
(21) Application number: 19903209.5
(22) Date of filing: 20.11.2019
(51) Int. Cl.: G02B 6/44

(54) **WELDING MODULE AND COMMUNICATION DEVICE**

(30) Priority: 29.12.2018 CN 201811647391
(71) Applicant: HUAWEI TECHNOLOGIES CO., LTD., Shenzhen, Guangdong 518129 (CN)
(72) Inventor: SHU, Siwen, Shenzhen, Guangdong 518129 (CN); YAN, Hongyu, Shenzhen, Guangdong 518129 (CN)
(74) Representative: Körber, Martin Hans
(86) International application number: PCT/CN2019/119716
(87) International publication number: WO 2020/134733

(57) **Abstract**

This application provides a splicing module and a communications device. The splicing module may be slidably mounted in a cabinet, and includes a tray, a guiding structure, and a plurality of splicing trays. The plurality of splicing trays are sequentially arranged in a direction perpendicular to a sliding direction of the tray relative to the cabinet, and each of the splicing trays is rotatably mounted on the tray. The guiding structure includes a first guiding structure configured to guide a first cable to one side of the splicing tray, and a second guiding structure configured to guide a second cable to the other side of the splicing tray. An arrangement direction of the splicing trays is adjusted, so that more splicing trays can be arranged in the direction perpendicular to the sliding direction of the tray relative to the cabinet, and therefore space in an entire width direction is fully utilized. The guiding structure is used to guide the cable to enter, and the first cable and the second cable are connected in the splicing tray to implement splicing of an optical cable. Therefore, possible disorder or overbending of the cable can be avoided in a pulling process, and space utilization and safety and reliability of the cable are improved.

## Description

### CROSS-REFERENCE TO RELATED APPLICATIONS

This application claims priority to Chinese Patent Application No. 201811647391.0, filed with the Chinese Patent Office on December 29, 2018 and entitled "SPLICING MODULE AND COMMUNICATIONS DEVICE", which is incorporated herein by reference in its entirety.

### TECHNICAL FIELD

This application relates to the field of communications technologies, and in particular, to a splicing module and a communications device.

### BACKGROUND

In an optical distribution network, to facilitate splicing between different nodes of an optical cable, splicing modules arranged in a modular form appear. To facilitate splicing work and subsequent scheduling, management, and maintenance of an operator in a module, drawer-like splicing modules gradually become a preferred option of a carrier. An existing splicing module includes a bracket and splicing trays that are placed on the bracket. An optical fiber passage for an optical fiber to pass through is disposed on the bracket, a rotation shaft of the splicing tray is perpendicular to a pulling movement direction of the bracket, and the plurality of splicing trays are sequentially arranged in the pulling movement direction of the bracket. However, this arrangement manner of the splicing trays causes comparatively serious space waste in a width direction of the entire splicing module, has a comparatively high requirement on depth space, and has comparatively low space utilization. In addition, in a pulling process of the splicing module, disorder or overbending of the optical fiber may be caused, especially for an optical fiber with a comparatively large diameter and a comparatively large bending radius. As a result, service quality inside the optical fiber is affected, or service interruption even occurs.

### SUMMARY

This application provides a splicing module and a communications device, to improve space utilization and safety and reliability of a cable during usage.

According to a first aspect, an example embodiment of this application provides a splicing module. The splicing module is applied to a cabinet of a communications device. During disposing, the splicing module is configured to implement splicing of different nodes of an optical cable. During mounting, the splicing module is slidably mounted in the cabinet, and the splicing module is connected to a plurality of cables by using a splicing tray. Therefore, to improve an arrangement manner of the splicing tray and improve space utilization, an arrangement direction of the splicing tray is adjusted in the splicing module of this application. During specific disposing, the splicing module includes a tray and a plurality of splicing trays. The plurality of splicing trays are sequentially arranged in a direction perpendicular to a sliding direction of the tray relative to the cabinet, each splicing tray is rotatably mounted on the tray, and a rotation shaft of the splicing tray is parallel to the sliding direction of the tray relative to the cabinet. In this way, more splicing trays can be arranged in the direction perpendicular to the sliding direction of the tray relative to the cabinet, so that space in an entire width direction is fully utilized. In addition, compared with the prior art, the splicing module of this application does not have a high requirement on a depth. This ensures that a volume of the entire splicing module is comparatively small. To improve a cabling manner of a cable, a guiding structure is disposed in the splicing module of this application. During specific disposing, the guiding structure includes a first guiding structure and a second guiding structure. The first guiding structure is configured to guide a first cable to one side of the splicing tray, and the second guiding structure is configured to guide a second cable to another side of the splicing tray, so that the first cable and the second cable are connected by using the splicing tray, to implement splicing of an optical cable. The guiding structure is used to guide the cable to enter, so that possible disorder or overbending of the cable can be avoided in a pulling process. As can be learned from the foregoing description, the arrangement manner of the splicing tray is set, and it is specified that the first guiding structure and the second guiding structure cooperate in the arrangement manner, to guide the first cable and the second cable to the splicing tray for connection. This improves space utilization and safety and reliability of the cable in the splicing module.

When the first guiding structure is specifically disposed, different manners may be selected. For example, the first guiding structure includes a first positioning plate and a first hook that is disposed on the first positioning plate and that is configured to fasten the first cable. The first cable is limited by the first positioning plate, and the hook configured to fasten the first cable is disposed on the first positioning plate, to fasten the first cable, so that an end of the first cable is always fastened in the tray when the tray is pulled out or received. During specific disposing, a first transmission line opening is disposed at a rear end of one side of the tray, a first passage that is connected to the first transmission line opening and that is configured to accommodate the first cable is formed between the first positioning plate and a side wall of the tray, and the first cable moves in the first passage, to ensure that the splicing module is pulled freely.

When the first positioning plate is specifically disposed, the first positioning plate includes a first vertical portion and a first arc-shaped bending portion connected to the first vertical portion, and the first hook is fixedly disposed on the first arc-shaped bending portion. A bending direction of the cable is defined by the disposed first arc-shaped bending portion.

When the first passage is specifically disposed, a first baffle plate configured to fasten the first cable is disposed in the first passage. The first cable is prevented from jumping out by using the disposed first baffle plate, to protect the first cable when the splicing module is pulled.

When the second guiding structure is specifically disposed, different manners may be selected. For example, the second guiding structure includes a second positioning plate and a second hook that is disposed on the second positioning plate and that is configured to fasten the second cable. The second cable is limited by the second positioning plate, and the hook configured to fasten the second cable is disposed on the second positioning plate, to fasten the second cable, so that an end of the second cable is always fastened in the tray when the tray is pulled out or received. During specific disposing, a second transmission line opening is disposed at a rear end of another side of the tray, a second passage that is connected to the second transmission line opening and that is configured to accommodate the second cable is formed between the second positioning plate and the side wall of the tray, and the second cable moves in the second passage, to ensure that the splicing module is pulled freely.

When the second positioning plate is specifically disposed, the second positioning plate includes a second first arc-shaped bending portion, a third first arc-shaped bending portion, and a second vertical portion that connects the second first arc-shaped bending portion and the third first arc-shaped bending portion, the second hook is fixedly disposed on the third first arc-shaped bending portion, and a direction in which the second first arc-shaped bending portion and the side wall of the tray limit bending of the second cable is opposite to a direction in which the third first arc-shaped bending portion and the side wall of the tray limit the second cable. The bending direction of the cable is limited by the disposed first arc-shaped bending portion and the disposed third first arc-shaped bending portion. The second first arc-shaped bending portion, the third first arc-shaped bending portion, and the second vertical portion are disposed, and it is specified that the direction in which the second first arc-shaped bending portion and the side wall of the tray limit bending of the second cable is opposite to the direction in which the third first arc-shaped bending portion and the side wall of the tray limit the second cable, to ensure that the second cable is guided to a position opposite to the first cable.

When the second passage is specifically disposed, a second baffle plate configured to fasten the second cable is disposed in the second passage. The second cable is prevented from jumping out by using the disposed second baffle plate, to protect the second cable when the splicing module is pulled.

When the guiding structure is specifically disposed, different manners may be selected. For example, the first guiding structure further includes a plurality of first guiding components configured to guide the first cable to the splicing tray, and the second guiding structure further includes a plurality of second guiding components configured to guide the second cable to the splicing tray. The first guiding components and the second guiding components are symmetrically disposed on two sides of the splicing tray. The first cable may be distributed to one side of the splicing tray by using the first guiding component, and the second cable may be distributed to another side of the splicing tray by using the second guiding component. The first cable and the second cable are opposite to each other, and are connected in the splicing tray.

When the first guiding component and the second guiding component are specifically disposed, the tray further includes rectilinear guiding structures symmetrically disposed on the two sides of the splicing tray, each of the first guiding components and each of the second guiding components include an arc-shaped guiding groove, and an extension direction of the arc-shaped guiding groove is tangent to an extension direction of the rectilinear guiding structure. The arc-shaped guiding groove is disposed to facilitate movement of the first cable or the second cable. When the arc-shaped guiding groove is specifically disposed, the arc-shaped guiding groove includes an arc-shaped plate and a third baffle plate that is disposed on the arc-shaped plate and that is configured to fasten the first cable or the second cable. A bending direction of the first cable or the second cable is defined by the disposed arc-shaped plate. When the arc-shaped guiding groove is specifically disposed, the arc-shaped guiding groove further includes a fastening rod disposed at an end that is of the arc-shaped plate and that is away from the splicing tray, and a fastener fixedly disposed on the fastening rod, and the fastener is configured to fasten and detach the first cable or the second cable.

According to a second aspect, an example embodiment of this application provides a communications device. The communications device includes a cabinet, where a slot is disposed on the cabinet, and the communications device further includes a pulling module, where the pulling module includes any one of the foregoing splicing modules slidably mounted in the slot. In addition, during connection, the cabinet is connected to the splicing module by using a cable. During connection, two ends of the cable are separately connected to the cabinet and the splicing tray, and the cable is guided to the splicing tray by the guiding structure. As can be learned from the foregoing description, the arrangement manner of the splicing tray is set, and it is specified that the guiding structure cooperates in the arrangement manner, to guide the cable to the splicing tray for connection. This improves space utilization and safety and reliability of the cable in the splicing module.

### BRIEF DESCRIPTION OF DRAWINGS

FIG. 1 is a schematic structural diagram of a communications device according to an embodiment of this application;
FIG. 2 is a schematic diagram of cooperation between a splicing module and a slide according to an embodiment of this application;
FIG. 3 is a schematic structural diagram of a splicing module from which a splicing tray is removed according to an embodiment of this application; and
FIG. 4 is a schematic diagram of cooperation between a splicing module and a slide when the splicing module is pulled out according to an embodiment of this application.

### DESCRIPTION OF EMBODIMENTS

To make the objectives, technical solutions, and advantages of this application clearer, the following further describes this application in detail with reference to the accompanying drawings.

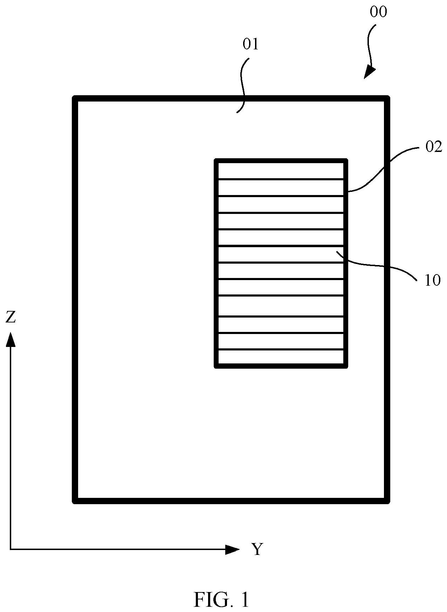

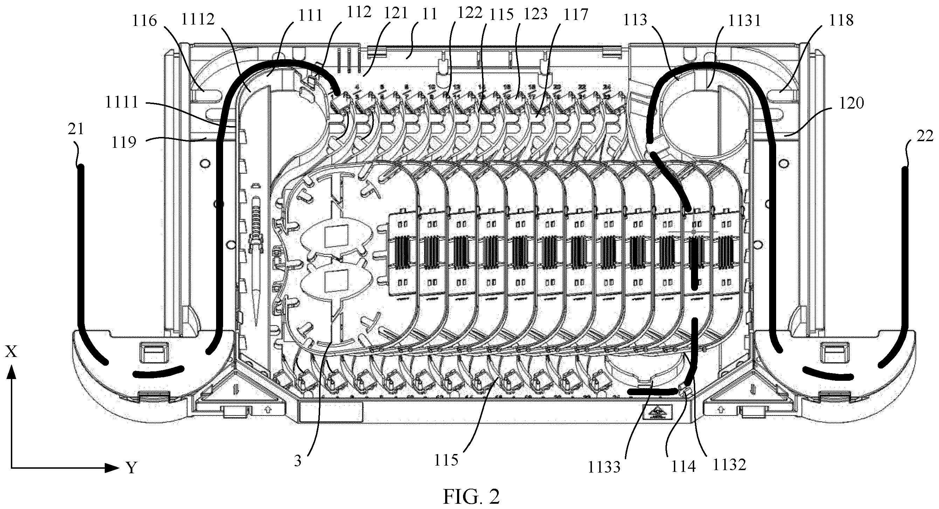

To facilitate understanding of a splicing module 10 provided in an embodiment of this application, the following first describes an application scenario of the splicing module 10. An example embodiment of this application provides a communications device 00. FIG. 1 is a schematic structural diagram of the communications device 00 according to an example embodiment of this application. The communications device 00 includes: a cabinet 01, where a slot 02 is disposed in the cabinet 01, and a plurality of splicing modules 10 are disposed in the slot 02. A cable 2 may be disposed in the splicing module 10. For example, a first cable 21 and a second cable 22 may be connected by using the splicing module 10. Referring to FIG. 2, the splicing module 10 is applied in the cabinet 01 of the communications device 00. During disposing, the splicing module 10 is configured to implement splicing of different nodes of an optical cable. During mounting, the splicing module 10 is slidably mounted on a slide 021 of the cabinet 01. The splicing module 10 is used as a carrier to accommodate the splicing tray 3, and the splicing module 10 is connected to a plurality of cables 2 by using the splicing tray 3. During usage, the splicing module 10 is slidably mounted in the cabinet 01 of the communications device 00, and may be pulled out from the cabinet 01. When the plurality of splicing trays 3 are accommodated, the splicing trays 3 are disposed in a tray 11. To improve space utilization and fully use transverse space, larger operation space can be provided under a condition of a same depth. In this embodiment of this application, a structure of the splicing module 10 is improved. The following describes the splicing module 10 in this embodiment of this application in detail with reference to the accompanying drawings. For ease of description, it is assumed that a pushing direction of the splicing module 10 is an X direction, a width direction of the tray 11 is a Y direction, and an arrangement direction of the plurality of splicing modules 10 is a Z direction. It is specified that the tray 11 has a front side and a rear side in the X direction, and the tray 11 has a left side and a right side in the Y direction.

FIG. 2 shows a structure of the splicing module 10 according to an embodiment of this application. The splicing module 10 includes one tray 11 and a plurality of splicing trays 3. The tray 11 may be slidably mounted in the cabinet 01. The slide 021 cooperating with the splicing module 10 is disposed on the corresponding cabinet 01. In the splicing module 10 provided in this embodiment of this application, to improve an arrangement manner of the splicing trays 3 and improve space utilization, an arrangement direction of the splicing trays 3 is adjusted in the splicing module 10 of this application. During specific disposing, the plurality of splicing trays 3 are sequentially arranged in a direction perpendicular to a sliding direction of the tray 11 relative to the cabinet 01, that is, the plurality of splicing trays 3 are arranged in the Y direction or the plurality of splicing trays 3 are arranged in a reverse direction of the Y direction. In addition, each splicing tray 3 is rotatably mounted in the tray 11, and a rotation shaft of the splicing tray 3 is parallel to the sliding direction of the tray 11 relative to the cabinet 01, that is, the rotation shaft of the splicing tray 3 is parallel to the X direction. In this arrangement manner of the plurality of splicing trays 3, more splicing trays 3 can be arranged in the width direction of the tray 11, so that space in the entire width direction is fully utilized. In addition, under a condition of a same depth, the splicing module 10 can provide larger construction operation space in the X direction. In addition, compared with the prior art, the splicing module 10 of this application does not have a high requirement on a depth. This ensures that a volume of the entire splicing module 10 is comparatively small.

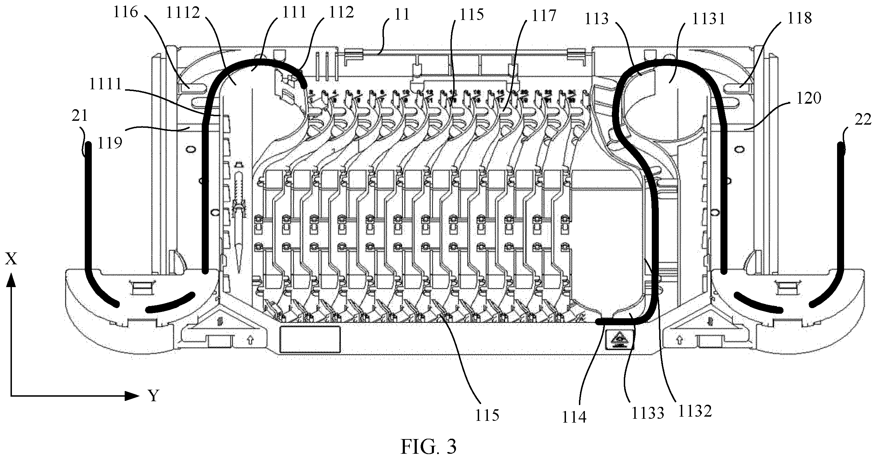

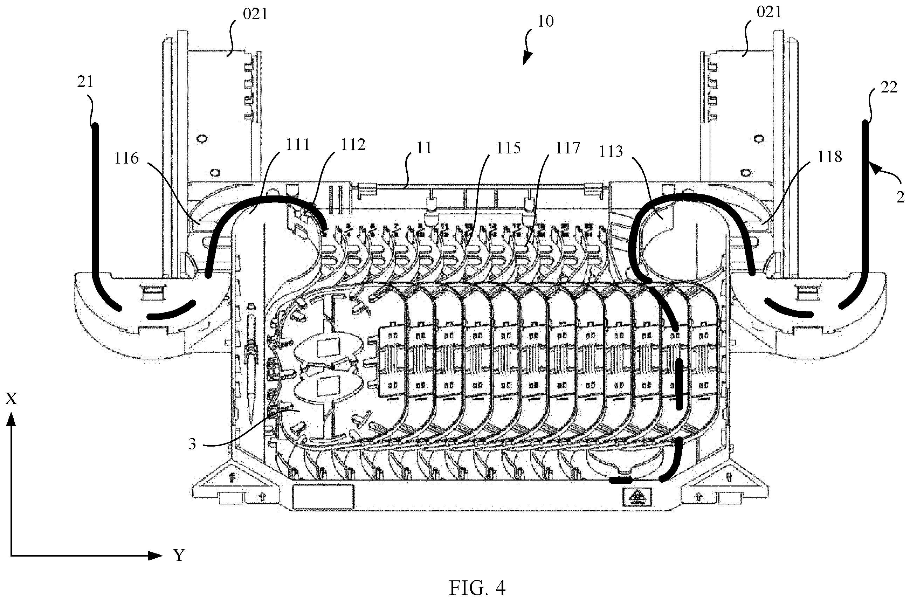

FIG. 3 shows a structure of the splicing module 10 from which a splicing tray is removed according to an embodiment of this application. FIG. 4 shows a structure of the splicing module 10 when the splicing module 10 is pulled out according to an embodiment of this application. When the splicing module 10 is used, the splicing module 10 is slidably mounted in the cabinet 01 of the communications device 00, and may be pulled out from the cabinet 01. When the splicing tray 3 is accommodated, the splicing tray 3 is connected to the cabinet 01 by using the first cable 21 and the second cable 22 of the cable 2. When the splicing module 10 is pulled out, the first cable 21 and the second cable 22 are stretched out. When the splicing module 10 is pushed into the cabinet 01, the first cable 21 and the second cable 22 are bent to form redundancy. As can be learned from the foregoing description, when the splicing module 10 moves, disorder of the cable 2 is inevitably caused, and the cable 2 is easily damaged when being bent. Therefore, in this embodiment of this application, a structure of the splicing module 10 is improved, and the guiding structure is disposed in the splicing module 10 of this application to improve a cabling manner of the cable 2. During specific disposing, the guiding structure includes a first guiding structure and a second guiding structure. The first guiding structure and the second guiding structure are located on the left side and the right side of the tray 11. Positions of the first guiding structure and the second guiding structure are interchangeable and vary based on different rotation directions of the splicing tray 3. When the splicing tray 3 rotates from left to right, the second guiding structure is disposed on the left side of the tray 11. As shown in FIG. 2, when the splicing tray 3 rotates from right to left, the second guiding structure is disposed on a right side of a bottom housing. The first guiding structure is configured to guide the first cable 21 from outside the tray 11 to a front side of the splicing tray 3. Guiding entrance of the first cable 21 by the first guiding structure can avoid possible disorder or overbending of the first cable 21 in a pulling process. The second guiding structure is configured to guide the second cable 22 from outside the tray 11 to a rear side of the splicing tray 3. The first cable 21 and the second cable 22 are opposite to each other, and are connected in the splicing tray 3 to implement splicing of an optical cable. Guiding entrance of the second cable 22 by the second guiding structure can avoid possible disorder or overbending of the second cable 22 in a pulling process. As can be learned from the foregoing description, the arrangement manner of the splicing tray 3 is set, and it is specified that the first guiding structure and the second guiding structure cooperate in the arrangement manner, to guide the first cable 21 and the second cable 22 to the splicing tray 3 for connection. This improves space utilization and safety and reliability of the cable 2 in the splicing module 10.

The first guiding structure is configured to guide the first cable 21 and define a bending direction of the first cable 21. Different manners may be selected according to a requirement for defining a cabling direction and a cabling path of the first cable 21. As shown in FIG. 2, a first transmission line opening 119 is disposed at a rear end on the left side of the tray 11, the first guiding structure includes a first positioning plate 111, and a split structure or an integral structure may be used between the first positioning plate 111 and the splicing module 10. When the split structure is used, the first positioning plate 111 may be fixedly connected to the splicing module 10 by using bonding, welding, or a connector (a bolt, a screw, or a rivet). When the integral structure is used, the splicing module 10 may be integrally formed during production. The first positioning plate 111 is disposed at the rear end on the left side of the tray 11, a first passage is formed between the first positioning plate 111 and a side wall of the tray 11, the first passage is connected to the first transmission line opening 119, and the first cable 21 can move in the first passage. When positioning the first cable 21, the first positioning plate 111 fastens the first cable 21 by using the disposed first hook 112. When splicing is required, the splicing module 10 is pulled out from the cabinet 01, and then one first cable 21 is pulled out from the first hook 112 for operation and another first cable 21 is still placed at the first hook 112. An end of the first cable 21 is always fastened in the tray 11 when the tray 11 is pulled out or received, and the first cable 21 is enabled to extend along the first positioning plate 111 to limit a moving track and a bending radius of the first cable 21, to ensure that the splicing module 10 is pulled freely.

When the first positioning plate 111 is specifically disposed, different structural forms may be used. FIG. 2 shows a specific structure of the first positioning plate 111. The first positioning plate 111 shown in FIG. 2 includes two parts: a first vertical portion 1111 and a first arc-shaped bending portion 1112 that is connected to the first vertical portion 1111. The first vertical portion 1111 and the first arc-shaped bending portion 1112 may be an integral structure. In this case, the first vertical portion 1111 and the first arc-shaped bending portion 1112 are produced through integral forming. The first vertical portion 1111 and the first arc-shaped bending portion 1112 may be alternatively separate structures. In this case, the first vertical portion 1111 and the first arc-shaped bending portion 1112 may be connected to each other, or may not be connected to each other. When the first vertical portion 1111 and the first arc-shaped bending portion 1112 are not connected to each other, the first vertical portion 1111 and the first arc-shaped bending portion 1112 are separately fixedly connected to the tray 11. In addition, ends that are of the first arc-shaped bending portion 1112 and the first vertical portion 1111 and that are close to each other may be in direct contact, or may be spaced by a specific gap. During connection, the first vertical portion 1111 is connected to the first transmission line opening 119 and extends towards the X direction, the first arc-shaped bending portion 1112 is connected to an end that is of the first vertical portion 1111 and that is away from the first transmission line opening 119, and a dent of the first arc-shaped bending portion 1112 faces the right side of the tray 11. Therefore, after extending along the first vertical portion 1111, the first cable 21 is bent along an outer arc surface of the first arc-shaped bending portion 1112 and enters the tray 11. Certainly, a shape of the first arc-shaped bending portion 1112 is not limited to an arc-shaped structure shown in FIG. 2, and another form, for example, an S-shaped structure or a U-shaped structure, may also be used as long as the bending direction of the first cable 21 can be defined.

When the first arc-shaped bending portion 1112 is specifically disposed, a radius of the first arc-shaped bending portion 1112 should be greater than a minimum bending radius of the first cable 21. The minimum bending radius of the first cable 21 is a minimum bending radius that is allowed when the first cable 21 is not damaged. When the first arc-shaped bending portion 1112 is specifically disposed, the first hook 112 is disposed on the first arc-shaped bending portion 1112. As shown in FIG. 2, a portion obtained after the first arc-shaped bending portion 1112 is bent is located on a right side of the first vertical portion 1111, and after extending along the first vertical portion 1111, the first cable 21 is bent along the outer arc surface of the first arc-shaped bending portion 1112, and is fastened by the first hook 112. When the first hook 112 is specifically disposed, as shown in FIG. 2, there are two first hooks 114, and the two first hooks 112 are separately located at ends that are of the first arc-shaped bending portion 1112 and that are in the Z direction. Certainly, a quantity and disposing positions of first hooks 112 are not limited to the structure shown in FIG. 2. Different quantities of first hooks 112, for example, one, two, or three, may be provided in this embodiment of this application. A quantity of first hooks 112 is determined based on a quantity of splicing trays 3 in the tray 11. In addition, disposing positions of the first hooks 112 are not limited only to two ends of the first arc-shaped bending portion 1112, and are determined based on an actual specific status of the tray 11.

FIG. 2 shows a structure of the first passage. When the first passage is specifically disposed, a plurality of first baffle plates 116 are disposed in the first passage. The plurality of first baffle plates may all be disposed on a surface that is of the side wall of the tray 11 and that faces the first positioning plate 111, and are evenly distributed in an area opposite to the first positioning plate 111. Alternatively, the plurality of first baffle plates may be evenly disposed on a surface that is of the first positioning plate 111 and that faces the side wall of the tray 11. When the first positioning plate 111 includes the first vertical portion 1111 and the first arc-shaped bending portion 1112, the first baffle plates 116 are disposed on both the first vertical portion 1111 and the first arc-shaped bending portion 1112. The first baffle plates 116 on the first arc-shaped bending portion 1112 are evenly distributed along the outer arc surface. Certainly, some of the plurality of first baffle plates may be alternatively disposed on the surface that is of the side wall of the tray 11 and that faces the first positioning plate 111, and the other first baffle plates may be disposed on the surface that is of the first positioning plate 111 and that faces the side wall of the tray 11. When the first cable 21 passes through the first passage, the baffle plate can fasten the first cable 21, to prevent the first cable 21 from jumping in the first passage in a movement process. This ensures stability and safety of movement of the first cable 21.

The second guiding structure is configured to guide the second cable 22 and define a bending direction of the second cable 22. Different manners may be selected according to a requirement for defining a cabling direction and a cabling path of the second cable 22. As shown in FIG. 2, a second transmission line opening 120 is disposed at a rear end on the right side of the tray 11, the second guiding structure includes a second positioning plate 113, and similar to that of the first positioning plate 111, a split structure or an integral structure may be used between the second positioning plate 113 and the splicing module 10. When the split structure is used, the second positioning plate 113 may be fixedly connected to the splicing module 10 by using bonding, welding, or a connector (a bolt, a screw, or a rivet). When the integral structure is used, the splicing module 10 may be integrally formed during production. The second positioning plate 113 is disposed at the rear end on the right side of the tray 11, a second passage is formed between the second positioning plate 113 and the side wall of the tray 11, the second passage is connected to the second transmission line opening 120, and the second cable 22 can move in the second passage. When positioning the second cable 22, the second positioning plate 113 fastens the second cable 22 by using the disposed second hook 114. When splicing is required, the splicing module 10 is pulled out from the cabinet 01, and then one second cable 22 is pulled out from the second hook 114 for operation and another second cable 22 is still placed at the second hook 114. An end of the second cable 22 is always fastened in the tray 11 when the tray 11 is pulled out or received, and the second cable 22 is enabled to extend along the second positioning plate 113 to limit a moving track and a bending radius of the second cable 22, to ensure that the splicing module 10 is pulled freely.

When the second positioning plate 113 is specifically disposed, different structural forms may be used. FIG. 2 shows a specific structure of the second positioning plate 113. The second positioning plate 113 shown in FIG. 2 includes three parts: a second arc-shaped bending portion 1131, a third arc-shaped bending portion 1133, and a second vertical portion 1132 that connects the second arc-shaped bending portion 1131 and the third arc-shaped bending portion 1133. The second arc-shaped bending portion 1131, the third arc-shaped bending portion 1133, and the second vertical portion 1132 may be an integral structure. In this case, the second arc-shaped bending portion 1131, the third arc-shaped bending portion 1133, and the second vertical portion 1132 are produced through integral forming. Alternatively, the second arc-shaped bending portion 1131, the third arc-shaped bending portion 1133, and the second vertical portion 1132 may be separate structures. The second arc-shaped bending portion 1131, the third arc-shaped bending portion 1133, and the second vertical portion 1132 may not be connected to each other, or the second arc-shaped bending portion 1131 is connected to the second vertical portion 1132 and the third arc-shaped bending portion 1133 is connected to the second vertical portion 1132. When the second arc-shaped bending portion 1131, the third arc-shaped bending portion 1133, and the second vertical portion 1132 are not connected to each other, the second arc-shaped bending portion 1131, the third arc-shaped bending portion 1133, and the second vertical portion 1132 are separately fixedly connected to the tray 11. In addition, ends that are of the second arc-shaped bending portion 1131, the third arc-shaped bending portion 1133, and the second vertical portion 1132 and that are close to each other may be in direct contact, or may be spaced by a specific gap. During connection, the second arc-shaped bending portion 1131 is connected to the second transmission line opening 120, and a dent of the second arc-shaped bending portion 1131 faces the left side of the tray 11. Therefore, the second cable 22 is bent along an outer arc surface of the second arc-shaped bending portion 1131 and enters the tray 11. The second vertical portion 1132 is connected to an end that is of the second arc-shaped bending portion 1131 and that is away from the second transmission line opening 120, and extends towards the X direction. Therefore, the second cable 22 entering the tray 11 along the outer arc surface of the second arc-shaped bending portion 1131 extends along the second vertical portion 1132. The third arc-shaped bending portion 1133 is connected to an end that is of the second vertical portion 1132 and that is away from the second arc-shaped bending portion 1131, and a dent of the third arc-shaped bending portion 1133 faces the left side of the tray 11. Therefore, the second cable 22 entering the tray 11 along the outer arc surface of the second arc-shaped bending portion 1131 continues to enter the tray 11 along the outer arc surface of the second arc-shaped bending portion 1131 after extending along the second vertical portion 1132. When the second arc-shaped bending portion 1131 and the third arc-shaped bending portion 1133 are disposed, a direction in which the second arc-shaped bending portion 1131 and the side wall of the tray 11 limit bending of the second cable 22 is opposite to a direction in which the third arc-shaped bending portion 1133 and the side wall of the tray 11 limit the second cable 22. The second cable 22 changes the bending direction twice, so that the second cable 22 changes from extending in the X direction to extending in the Y direction, to ensure that the second cable 22 is guided to a position on a side opposite to the first cable 21, that is, the first cable 21 and the second cable 22 are separately located on two sides of the splicing tray 3. Certainly, shapes of the second arc-shaped bending portion 1131 and the third arc-shaped bending portion 1133 are not limited to the arc-shaped structure shown in FIG. 2, and another form, for example, an S-shaped structure or a U-shaped structure, may also be used as long as a bending direction of the second cable 22 can be limited.

When the second arc-shaped bending portion 1131 and the third arc-shaped bending portion 1133 are specifically disposed, radiuses of the second arc-shaped bending portion 1131 and the third arc-shaped bending portion 1133 should be greater than a minimum bending radius of the second cable 22. The minimum bending radius of the second cable 22 is a minimum bending radius that is allowed when the second cable 22 is not damaged. When the third arc-shaped bending portion 1133 is specifically disposed, a second hook 114 is disposed on the third arc-shaped bending portion 1133. As shown in FIG. 2, a portion that is obtained after the third arc-shaped bending portion 1133 is bent is located on a left side of the second vertical portion 1132. After extending along the second vertical portion 1132, the second cable 22 is bent along an outer arc surface of the third arc-shaped bending portion 1133, and is fastened by the second hook 114. When the second hook 114 is specifically disposed, as shown in FIG. 2, there are two second hooks 114, and the two second hooks 114 are separately located at ends that are of the second arc-shaped bending portion 1131 and that are in the Z direction. Certainly, a quantity and disposing positions of second hooks 114 are not limited to the structure shown in FIG. 2. Different quantities of second hooks 114, for example, one, two, or three, may be provided in this embodiment of this application. The quantity of second hooks 114 is determined based on a quantity of splicing trays 3 in the tray 11. In addition, the disposing positions of the second hooks 114 are not limited only to two ends of the second arc-shaped bending portion 1131. As shown in FIG. 2, the second hooks 114 may be alternatively disposed at a position that is on an inner wall of the tray 11 and that is opposite to the third arc-shaped bending portion 1133, and the disposing positions of the second hooks 114 are determined based on an actual specific status of the tray 11.

FIG. 2 shows a structure of the second passage. When the second passage is specifically disposed, a plurality of second baffle plates 118 are disposed in the second passage, and the plurality of second baffle plates may all be disposed on a surface that is of the side wall of the tray 11 and that faces the second positioning plate 113, and are evenly distributed in an area opposite to the second positioning plate 113. Alternatively, the plurality of second baffle plates may be evenly disposed on a surface that is of the second positioning plate 113 and that faces the side wall of the tray 11. When the second positioning plate 113 includes a second arc-shaped bending portion 1131, a third arc-shaped bending portion 1133, and a second vertical portion 1132, the second baffle plates 118 are disposed on each of the second arc-shaped bending portion 1131, the third arc-shaped bending portion 1133, and the second vertical portion 1132. The second baffle plates 118 on the second arc-shaped bending portion 1131 and the third arc-shaped bending portion 1133 are evenly distributed along outer arc surfaces. Certainly, some of the plurality of second baffle plates may be alternatively disposed on the surface that is of the side wall of the tray 11 and that faces the second positioning plate 113, and the other second baffle plates may be disposed on the surface that is of the second positioning plate 113 and that faces the side wall of the tray 11. When the second cable 22 passes through the second passage, the baffle plate can fasten the second cable 22, to prevent the second cable 22 from jumping in the second passage in a movement process. This ensures stability and safety of movement of the second cable 22.

The cable 2 that enters from the first guiding structure and the second guiding structure may be divided into at least one bunch of cable 2 in advance. The at least one bunch of cable 2 is separately fastened to the first hook 112 and the second hook 114, and the at least one bunch of cable 2 may be in a one-to-one correspondence with the at least one splicing tray 3. When the guiding structure is specifically disposed, different manners may be selected to guide the at least one bunch of cable 2 to the splicing tray 3 corresponding to the at least one bunch of cable 2. FIG. 2 shows a specific structure of the first guiding structure and the second guiding structure. The first guiding structure further includes a plurality of first guiding components. The first guiding component is configured to guide the first cable 21 to the splicing tray 3, and the plurality of first guiding components are sequentially arranged in the Y direction. The first cable 21 fastened on the first hook 112 may be distributed to the rear side of the splicing tray 3 by using the first guiding component. The second guiding structure further includes a plurality of second guiding components. The second guiding component is configured to guide the second cable 22 to the splicing tray 3, and the plurality of second guiding components are sequentially arranged in the Y direction. The second cable 22 fastened on the second hook 114 may be distributed to the front side of the splicing tray 3 by using the second guiding component. The first guiding component and the second guiding component are symmetrically disposed on the front side and the rear side of the splicing tray 3. The first cable 21 may be distributed to the rear side of the splicing tray 3 by using the first guiding component, and the second cable 22 may be distributed to the front side of the splicing tray 3 by using the second guiding component, so that the first cable 21 and the second cable 22 that are located on the front side and the rear side of the splicing tray 3 are opposite to each other, and are connected in the splicing tray 3.

FIG. 2 shows a structure of the first guiding component and the second guiding component. When the first guiding component and the second guiding component are specifically disposed, the tray 11 further includes rectilinear guiding structures 121 symmetrically disposed on two sides of the splicing tray 3. The rectilinear guiding structure 121 located on a rear side of the splicing tray 3 ensures that there is plenty of movement space when the first cable 21 is distributed from the first hook 112 to different first guiding components, to avoid interference between different first cables 21. Similarly, the rectilinear guiding structure 121 located on the front side of the splicing tray 3 ensures that there is plenty of movement space when the second cable 22 is distributed from the second hook 114 to different second guiding components, to avoid interference between different second cables 22 and ensure that the first cable 21 can move smoothly. As shown in FIG. 2, each first guiding component includes an arc-shaped guiding groove, and an extension direction of the arc-shaped guiding groove is tangent to an extension direction of the rectilinear guiding structure 121. After being detached from the first hook 112, a first cable 21 is guided to the rear side of the splicing tray 3 through the arc-shaped guiding groove. This distribution manner facilitates an operation of an operator, and prevents disorderly placement of the first cable 21 in the tray 11. Each second guiding component includes an arc-shaped guiding groove, and an extension direction of the arc-shaped guiding groove is tangent to an extension direction of the rectilinear guiding structure 121. After being detached from the second hook 114, a second cable 22 is guided to the rear side of the splicing tray 3 through the arc-shaped guiding groove. This distribution manner also facilitates an operation of an operator, and prevents disorderly placement of the second cable 22 in the tray 11. Therefore, the arc-shaped guiding groove is disposed to facilitate movement of the first cable 21 or the second cable 22.

When the arc-shaped guiding groove is specifically disposed, FIG. 2 shows a specific structure of the arc-shaped guiding groove. The arc-shaped guiding groove includes an arc-shaped plate 115, and the arc-shaped plate 115 can define a bending direction of the first cable 21 or the second cable 22. A bending direction of the arc-shaped plate 115 on the rear side of the splicing tray 3 faces the left side of the tray 11, and a bending direction of the first cable 21 that passes through the arc-shaped plate 115 faces the left side of the tray 11. A bending direction of the arc-shaped plate 115 on the front side of the splicing tray 3 faces the right side of the tray 11, and a bending direction of the first cable 21 that passes through the arc-shaped plate 115 faces the right side of the tray 11. The bending direction of the first cable 21 or the second cable 22 is defined by using the disposed arc-shaped plate 115, to guide the first cable 21 and the second cable 22 to a position opposite to the splicing tray 3 and connect the first cable 21 and the second cable 22 in the splicing tray 3. When the arc-shaped plate 115 is specifically disposed, a radius of the arc-shaped plate 115 should be greater than minimum bending radiuses of the first cable 21 and the second cable 22. The minimum bending radius of the first cable 21 is a minimum bending radius that is allowed when the first cable 21 is not damaged, and the minimum bending radius of the second cable 22 is a minimum bending radius that is allowed when the second cable 22 is not damaged. Certainly, a shape of the arc-shaped guiding groove is not limited to the arc-shaped structure shown in FIG. 2, and another form, for example, an S-shaped structure or a U-shaped structure, may also be used as long as a bending direction of the second cable 22 can be defined. When the arc-shaped plate 115 is specifically disposed, a plurality of third baffle plates 117 are disposed on the arc-shaped plate 115, and the plurality of third baffle plates 117 are evenly distributed on two sides of the arc-shaped plate 115. An extension direction of each third baffle plate 117 located on the rear side of the tray 11 faces a side that is of the arc-shaped plate 115 and that is close to the first hook 112, and an extension direction of each third baffle plate 117 on the front side of the tray 11 faces a side that is of the arc-shaped plate 115 and that is close to the second hook 114. When the first cable 21 passes through the arc-shaped guiding groove on the rear side of the tray 11, the third baffle plate 117 can fasten the first cable 21, to prevent the first cable 21 from jumping in the arc-shaped guiding groove in a movement process. This ensures stability and safety of movement of the first cable 21. When the second cable 22 passes through the arc-shaped guiding groove on the front side of the tray 11, the third baffle plate 117 can fasten the second cable 22, to prevent the second cable 22 from jumping in the arc-shaped guiding groove in a movement process. This ensures stability and safety of movement of the second cable 22.

Still referring to FIG. 2, to further fasten the first cable 21 or the second cable 22, when the arc-shaped guiding groove is specifically disposed, the arc-shaped guiding groove further includes a fastening rod 122 disposed at an end that is of the arc-shaped plate 115 and that is away from the splicing tray 3, and a fastener 123 fixedly disposed on the fastening rod 122. The fastener 123 is configured to fasten and detach the first cable 21 or the second cable 22. Each first cable 21 or each second cable 22 is fastened by the fastener 123, and the first cable 21 or the second cable 22 is detached after passing through the fastener 123. Each fastening rod 122 fastens only two fasteners 123. The first cable 21 or the second cable 22 is 2 mm before stripping, and after passing through the fastener 123, the first cable 21 or the second cable 22 remains 0.9 mm. Then, the first cable 21 or the second cable 22 of 0.9 mm enters the splicing tray 3 along the arc-shaped guiding groove, to implement single-core management in each splicing tray 3.

According to a second aspect, an example embodiment of this application provides a communications device 00. FIG. 1 is a schematic structural diagram of the communications device 00. The communications device 00 includes a cabinet 01, where a slot 02 is disposed in the cabinet 01. There may be one or more slots 02. When a plurality of slots 02 are used, the plurality of slots 02 are arranged in a height direction of the cabinet 01, that is, arranged in a Y direction. Each slot 02 is slidably connected to a pulling module, and the pulling module may be pulled into the slot 02 and pulled out from the slot 02. During specific disposing, each pulling module includes any one of the foregoing splicing modules 10 slidably mounted in the slot 02. In addition, during connection, the cabinet 01 is connected to the splicing module 10 by using a cable 2. During connection, two ends of the cable 2 are separately connected to the cabinet 01 and the splicing tray 3, and the cable 2 is guided to the splicing tray 3 by the guiding structure. As can be learned from the foregoing description, the arrangement manner of the splicing tray 3 is set, and the plurality of splicing trays 3 are sequentially arranged in the direction perpendicular to the sliding direction of the tray 11 relative to the cabinet 01, that is, the plurality of splicing trays 3 are arranged in the Y direction or the plurality of splicing trays 3 are arranged in the reverse direction of the Y direction. This improves the arrangement manner of the splicing tray 3 and space utilization. In addition, it is specified that the guiding structure cooperates in this arrangement manner, to guide the cable 2 to the splicing tray 3 for connection. Guiding entrance of the first cable 21 by the first guiding structure can avoid possible disorder or overbending of the first cable 21 in a pulling process, and guiding entrance of the second cable 22 by the second guiding structure can avoid possible disorder or overbending of the second cable 22 in a pulling process. This improves safety and reliability of the cable 2 in the splicing module 10.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A splicing module, slidably mounted in a cabinet, and comprising a tray, a guiding structure, and a plurality of splicing trays, wherein
the plurality of splicing trays are sequentially arranged in a direction perpendicular to a sliding direction of the tray relative to the cabinet, and each of the splicing trays is rotatably mounted on the tray; and
the guiding structure comprises a first guiding structure configured to guide a first cable to one side of the splicing tray, and a second guiding structure configured to guide a second cable to another side of the splicing tray.

2. The splicing module according to claim 1, wherein the first guiding structure comprises a first positioning plate and a first hook that is disposed on the first positioning plate and that is configured to fasten the first cable, a first transmission line opening is disposed at a rear end of one side of the tray, and a first passage that is connected to the first transmission line opening and that is configured to accommodate the first cable is formed between the first positioning plate and a side wall of the tray.

3. The splicing module according to claim 2, wherein the first positioning plate comprises a first vertical portion and a first arc-shaped bending portion connected to the first vertical portion, and the first hook is fixedly disposed on the first arc-shaped bending portion.

4. The splicing module according to claim 2 or 3, wherein a first baffle plate configured to fasten the first cable is disposed in the first passage.

5. The splicing module according to any one of claims 1 to 4, wherein the second guiding structure comprises a second positioning plate and a second hook that is disposed on the second limiting plate and that is configured to fasten the second cable, a second transmission line opening is disposed at a rear end of another side of the tray, and a second passage that is connected to the second transmission line opening and that is configured to accommodate the second cable is formed between the second positioning plate and the side wall of the tray.

6. The splicing module according to claim 4, wherein the second positioning plate comprises a second first arc-shaped bending portion, a third first arc-shaped bending portion, and a second vertical portion that connects the second first arc-shaped bending portion and the third first arc-shaped bending portion, the second hook is fixedly disposed on the third first arc-shaped bending portion, and a direction in which the second first arc-shaped bending portion and the side wall of the tray limit bending of the second cable is opposite to a direction in which the third first arc-shaped bending portion and the side wall of the tray limit the second cable.

7. The splicing module according to claim 5, wherein a second baffle plate configured to fasten the second cable is disposed in the second passage.

8. The splicing module according to any one of claims 1 to 7, wherein the first guiding structure further comprises a plurality of first guiding components configured to guide the first cable to the splicing tray, the second guiding structure further comprises a plurality of second guiding components configured to guide the second cable to the splicing tray, and the first guiding component and the second guiding component are symmetrically disposed on two sides of the splicing tray.

9. The splicing module according to claim 8, wherein the tray further comprises rectilinear guiding structures symmetrically disposed on two sides of the splicing tray, each of the first guiding components and each of the second guiding components comprise an arc-shaped guiding groove, and an extension direction of the arc-shaped guiding groove is tangent to an extension direction of the rectilinear guiding structure.

10. The splicing module according to claim 9, wherein the arc-shaped guiding groove comprises an arc-shaped plate and a third baffle plate that is disposed on the arc-shaped plate and that is configured to fasten the first cable or the second cable.

11. The splicing module according to claim 10, wherein the arc-shaped guiding groove further comprises a fastening rod disposed at an end that is of the arc-shaped plate and that is away from the splicing tray, and a fastener fixedly disposed on the fastening rod, and the fastener is configured to fasten and detach the first cable or the second cable.

12. A communications device, comprising:
a cabinet, wherein a slot is disposed on the cabinet;
a pulling module, comprising the splicing module according to any one of claims 1 to 11 that is slidably mounted in the slot; and
further comprising a cable, wherein two ends of the cable are separately connected to the cabinet and the splicing tray, and the cable is guided to the splicing tray by the guiding structure.
